# EUROPEAN PATENT APPLICATION

(11) **EP 4 131 117 A1**
(43) Date of publication of application: **08.02.2023**
(21) Application number: 21204214.7
(22) Date of filing: 22.10.2021
(51) Int. Cl.: G06Q 30/02, G06Q 30/06

(54) **METHOD AND SYSTEM FOR PROVIDING BEHAVIOR DATA SALES SERVICE**

(30) Priority: 06.08.2021 KR 20210103555
(71) Applicant: Wider Planet Inc., Seoul 06141 (KR)
(72) Inventor: Woo, Kyungchang, 06141 Seoul (KR); Park, Jongsoon, 06141 Seoul (KR); Lim, Hyunwoo, 06141 Seoul (KR); Won, Hyeok, 06141 Seoul (KR)
(74) Representative: AWA Sweden AB

(57) **Abstract**

Disclosed is a method and system for providing a behavior data sales service. A behavior data sales service providing method, implemented by a computer system, may include collecting behavior data of each of activity entities; associating the behavior data with unique information of each of the activity entities; generating sales data of each of the activity entities by assigning a valid period for the unique information of each of the activity entities to the unique information of each of the activity entities; monitoring the valid period for the unique information of each of the activity entities in response to selling sales data of each of the activity entities to each of purchase entities; and repeatedly updating the unique information of each of the activity entities according to the valid period for the unique information of each of the activity entities.

## Description

### CROSS-REFERENCE TO RELATED APPLICATION

This application claims the priority benefit of Korean Patent Application No. 10-2021-0103555, filed on August 6, 2021, in the Korean Intellectual Property Office, the disclosure of which is incorporated herein by reference.

### BACKGROUND

### 1. Field of the Invention

Example embodiments of the following description relate to a behavior data sales service providing system and method for selling behavior data of each of activity entities.

### 2. Description of the Related Art

With the development of mobile communication networks and mobile communication terminals, a mobile communication environment is built and research on marketing methods using the mobile communication environment is continuously conducted.

As a representative method among the marketing methods in the mobile communication environment, there is a method of providing a common advertisement to activity entities based on identification data of each of the activity entities. To provide an advertisement to the activity entities, identification data assigned to a device of each of the activity entities is required. The identification data refers to a termina number, a media access control (MAC) address, etc., fixedly assigned to a device of each of the activity entities.

As another method, there is a method of providing a personalized advertisement to activity entities. To this end, there is a need to verify attribute data of each of the activity entities and to provide a targeted advertising suitable for an interest of a corresponding activity entity in a timely manner. For example, the attribute data may include behavioral pattern data of each of the activity entities that operates through a device - information indicating a type of a webpage accessed by a device of an activity entity, content read by the activity entity on the webpage, an application executed by the activity entity on the device, etc., - personal data indicating a corresponding activity entity itself - personally identified or de-identified information that may be used for various marketing, such as an age, a gender, a residential area, etc., of a corresponding activity entity, telephone history, purchase information, credit information, a self-driving status, etc., of the activity entity. Likewise, to provide a targeted advertising to each of the activity entities, identification data assigned to the device of each of the activity entities is required.

As an example of a method of providing a targeted advertising based on identification data and attribute data, technology for encrypting information data of a user terminal in a form of Internet cookies and providing a targeted advertising service based on Internet cookie information is disclosed in Korean Patent Registration No. 10-1369433, registered on February 25, 2014.

Meanwhile, with spread of a service that provides a common advertisement to each of activity entities based on identification data and a service that provides a targeted advertising to each of activity entities based on identification data and attribute data, proposed is a service that sells identification data and/or attribute data of each of activity entities.

For example, a sales entity may provide identification data of each of activity entities to purchase entities for a cost such that the purchase entities may provide a common advertisement to each of the activity entities. Here, the cost paid by the purchase entities may be calculated based on a period for which identification data of each of the activity entities is to be used. Therefore, in a conventional data sales service, the purchase entities may be provided with the identification data and then use the identification data of each of the activity entities without permission at all times beyond a contracted period.

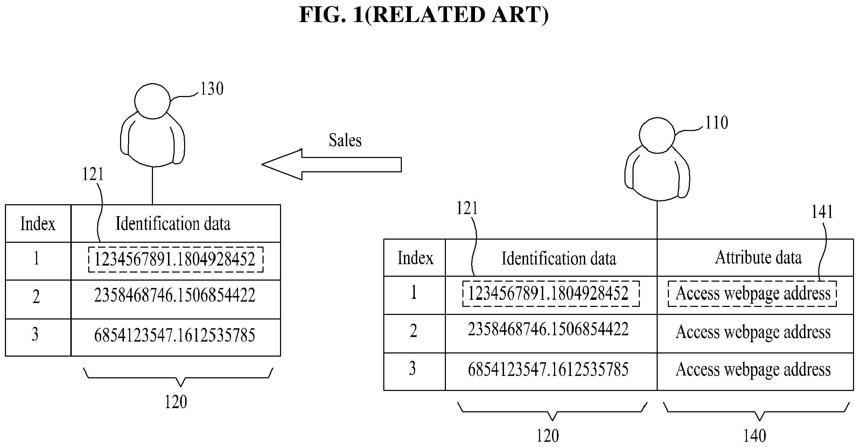

Also, as another example, referring to FIG. 1 to describe the conventional data sales service, when a sales entity 110 that sells identification data of each of activity entities provides identification data 120 of each of the activity entities to a purchase entity 130 for a cost and receives a request for verifying attribute data of a specific activity entity from the purchase entity 130, the sales entity 110 may extract attribute data 141 of the specific activity entity that maps identification data 121 of the specific activity entity from attribute data 140 of each of the activity entities and may transfer the extracted attribute data 141 to the purchase entity 130. Therefore, the purchase entity 130 may provide a targeted advertising to the specific activity entity based on the attribute data 141 of the specific activity entity. However, in the conventional data sales service, once the purchase entity 130 verifies the attribute data 140 for all the activity entities, the purchase entity 130 has no need to verify the attribute data 140 of each of a plurality of activity entities through the sales entity 110 and accordingly, may constantly use data of each of the activity entities without a need to pay the sales entity 110.

Also, as described above, when identification data of each of activity entities is used in the data sales service, it is impossible to change the identification data may not be changed. Therefore, in the conventional data sales service, a purchase entity may easily collect identification data of each of the activity entities without permission.

Also, as described above, when attribute data including personal data indicating activity entities is used in the data sales service, the conventional data sales service may easily expose personal information of each of the activity entities.

Accordingly, there is a need for technology for solving issues found in the conventional data sales service.

### SUMMARY

Example embodiments provide a data sales service providing method and system that may repeatedly update unique information of each of activity entities according to a valid period and allow purchase entities to use the unique information of each of the activity entities only for a limited period in proportion to a paid purchase price and a purchase period, in order to solve an issue that the purchase entities constantly collect and use the unique information of each of the activity entities without permission.

Also, example embodiments provide a data sales service providing method and system that may use unique information, i.e., a changeable software ID on a device instead of using identification data of each of activity entities and may use behavior data including behavioral pattern data of each of the activity entities for a program running on a device of each of the activity entities instead of using attribute data of each of the activity entities, in order to solve issues found in a conventional data sales service that personal information of each of the activity entities is exposed and identification data of each of the activity entities is unchangeable.

According to an example embodiment, there is provided a method of providing a behavior data sales service, implemented by a computer system, the method including collecting behavior data of each of activity entities; associating the behavior data with unique information of each of the activity entities; generating sales data of each of the activity entities by assigning a valid period for the unique information of each of the activity entities to the unique information of each of the activity entities; monitoring the valid period for the unique information of each of the activity entities in response to selling sales data of each of the activity entities to each of purchase entities; and repeatedly updating the unique information of each of the activity entities according to the valid period for the unique information of each of the activity entities.

According to an aspect, the behavior data sales service providing method may further include repeatedly providing the repeatedly updated unique information of each of the activity entities to at least one purchase entity among the purchase entities.

According to another aspect, the repeatedly providing may include changing a number of times the repeatedly updated unique information of each of the activity entities is provided to the at least one purchase entity based on a purchase price and a purchase period in which the at least one purchase entity purchases sales data of each of the activity entities.

According to another aspect, the generating may further include selling the sales data of each of the activity entities to each of the purchase entities based on a bid-based auction scheme.

According to another aspect, the selling may include selling the sales data of each of the activity entities to each of the purchase entities through a sales platform of a server that provides the behavior data sales service.

According to another aspect, the unique information of each of the activity entities may be data that is arbitrarily assigned to simply classify and identify each of the activity entities regardless of data that verifies an identity of each of the activity entities.

According to another aspect, the unique information of each of the activity entities may be a software ID that is changeable on a device of each of the activity entities.

According to another aspect, the repeatedly updating may include updating the unique information of each of the activity entities on a database of a server that provides the behavior data sales service; and updating the unique information of each of the activity entities on a device of each of the activity entities.

According to another aspect, the behavior data may include behavioral pattern data of each of the activity entities related to a program that runs on a device of each of the activity entities.

According to another aspect, the associating may include performing de-identification processing on the behavior data of each of the activity entities to make it impossible to verify an identity of each of the activity entities from the behavior data of each of the activity entities; and associating the unique information of each of the activity entities with the de-identification processed behavior data of each of the activity entities.

According to another aspect, the performing may include extracting valuable behavior data from the behavior data of each of the activity entities to provide a targeted advertising to each of the activity entities; and performing de-identification processing on the extracted behavior data of each of the activity entities.

According to an example embodiment, there is provided a non-transitory computer-readable record medium storing instructions that, when executed by a processor, cause the processor to perform a behavior data sales service providing method in conjunction with a computer system, and the behavior data sales service providing method includes collecting behavior data of each of activity entities; associating the behavior data with unique information of each of the activity entities; generating sales data of each of the activity entities by assigning a valid period for the unique information of each of the activity entities to the unique information of each of the activity entities; monitoring the valid period for the unique information of each of the activity entities in response to selling sales data of each of the activity entities to each of purchase entities; and repeatedly updating the unique information of each of the activity entities according to the valid period for the unique information of each of the activity entities.

According to an aspect, the behavior data sales service providing method may further include repeatedly providing the repeatedly updated unique information of each of the activity entities to at least one purchase entity among the purchase entities, and the repeatedly providing may include changing a number of times the repeatedly updated unique information of each of the activity entities is provided to the at least one purchase entity based on a purchase price and a purchase period in which the at least one purchase entity purchases sales data of each of the activity entities.

According to an example embodiment, there is provided a computer-implemented behavior data sales service providing system including at least one processor configured to execute computer-readable instructions. The at least one processor includes a collector configured to collect behavior data of each of the activity entities; an associator configured to associate the behavior data with unique information of each of the activity entities; a generator configured to generate sales data of each of the activity entities by assigning a valid period for the unique information of each of the activity entities to the unique information of each of the activity entities; a monitoring unit configured to monitor the valid period for the unique information of each of the activity entities in response to selling sales data of each of the activity entities to each of purchase entities; and an updater configured to repeatedly update the unique information of each of the activity entities according to the valid period for the unique information of each of the activity entities.

According to an aspect, the updater may be configured to repeatedly provide the repeatedly updated unique information of each of the activity entities to at least one purchase entity among the purchase entities, and to change a number of times the repeatedly updated unique information of each of the activity entities is provided to the at least one purchase entity based on a purchase price and a purchase period in which the at least one purchase entity purchases sales data of each of the activity entities.

According to some example embodiments, it is possible to provide a data sales service providing method and system that may repeatedly update unique information of each of activity entities according to a valid period and allow purchase entities to use the unique information of each of the activity entities only for a limited period in proportion to a paid purchase price and a purchase period, thereby solving an issue that the purchase entities constantly collect and use the unique information of each of the activity entities without permission.

Also, according to some example embodiments, it is possible to provide a data sales service providing method and system that may use unique information, i.e., a changeable software ID on a device instead of using identification data of each of activity entities and may use behavior data including behavioral pattern data of each of the activity entities for a program running on a device of each of the activity entities instead of using attribute data of each of the activity entities, thereby solving issues found in the conventional data sales service that personal information of each of the activity entities is exposed and identification data of each of the activity entities is unchangeable.

Further areas of applicability will become apparent from the description provided herein. The description and specific examples in this summary are intended for purposes of illustration only and are not intended to limit the scope of the present disclosure.

### BRIEF DESCRIPTION OF THE DRAWINGS

These and/or other aspects, features, and advantages of the invention will become apparent and more readily appreciated from the following description of embodiments, taken in conjunction with the accompanying drawings of which:
FIG. 1 illustrates a diagram to describe a data sales service according to the related art;
FIG. 2 is a diagram illustrating an internal configuration of a service that provides a behavior data sales service according to an example embodiment;
FIG. 3 is a diagram illustrating an example of a component includable in a processor of a server according to an example embodiment;
FIG. 4 is a flowchart illustrating a behavior data sales service providing method performed by a server according to an example embodiment;
FIG. 5 illustrates an example of a database used by a behavior data sales service providing method according to an example embodiment; and
FIG. 6 illustrates an example of providing, by a server, a behavior data sales service according to an example embodiment.

### DETAILED DESCRIPTION

Hereinafter, some example embodiments will be described in detail with reference to the accompanying drawings. The following detailed structural or functional description of example embodiments is provided as an example only and various alterations and modifications may be made to the example embodiments. Accordingly, the example embodiments are not construed as being limited to the disclosure and should be understood to include all changes, equivalents, and replacements within the technical scope of the disclosure.

The terminology used herein is for describing various example embodiments only, and is not to be used to limit the disclosure. The singular forms "a," "an," and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Terms, such as first, second, and the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component, without departing from the scope of the disclosure.

Unless otherwise defined, all terms, including technical and scientific terms, used herein have the same meaning as commonly understood by one of ordinary skill in the art to which this disclosure pertains. Terms, such as those defined in commonly used dictionaries, are to be interpreted as having a meaning that is consistent with their meaning in the context of the relevant art, and are not to be interpreted in an idealized or overly formal sense unless expressly so defined herein.

Regarding the reference numerals assigned to the elements in the drawings, it should be noted that the same elements will be designated by the same reference numerals, wherever possible, even though they are shown in different drawings. Also, in the description of embodiments, detailed description of well-known related structures or functions will be omitted when it is deemed that such description will cause ambiguous interpretation of the present disclosure.

Hereinafter, the example embodiments are described with reference to the accompanying drawings.

The example embodiments relate to a behavior data sales service providing method and system and may repeatedly update unique information of each of activity entities according to a valid period and allow purchase entities to use the unique information of each of the activity entities only for a limited period in proportion to a paid purchase price and a purchase period, thereby solving an issue that the purchase entities constantly collect and use the unique information of each of the activity entities without permission, and may use unique information, i.e., a changeable software ID on a device instead of using identification data of each of the activity entities and may use behavior data including behavioral pattern data of each of the activity entities for a program running on a device of each of the activity entities instead of using attribute data of each of the activity entities, thereby achieving the technical effect such as solving issues found in the conventional data sales service that personal information of each of the activity entities is exposed and identification data of each of the activity entities is unchangeable.

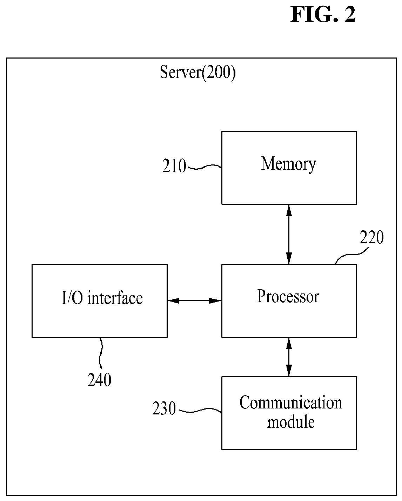

FIG. 2 is a diagram illustrating an internal configuration of a service that provides a behavior data sales service according to an example embodiment.

Referring to FIG. 2, a server 200 refers to an entity that performs the following behavior data sales service providing method and may be implemented as a computer apparatus or a plurality of computer apparatuses that provides an instruction, a code, a file, content, a service, etc., associated with the behavior data sales service providing method. For example, the server 200 may include a memory 210, a processor 220, a communication module 230, and an input/output (I/O) interface 240.

The memory 210 may include a permanent mass storage device, such as random access memory (RAM), read only memory (ROM), and a disk drive, as a computer-readable record medium. Also, an operating system (OS) or at least one program code (e.g., a code for executing the behavior data sales service providing method or an application including the code) may be stored in the memory 210. Such software components may be loaded from a computer-readable record medium separate from the memory 210. The separate computer-readable record medium may include, for example, a floppy drive, a disk, a tape, a DVD/CD-ROM drive, a memory card, and the like. According to another example embodiment, software components may be loaded to the memory 210 through the communication module 230 instead of the computer-readable record medium. For example, at least one program may be loaded to the memory 210 based on developers that generate a code for implementing the behavior data sales service providing method or a file distribution system that distributes an installation file of an application including the code.

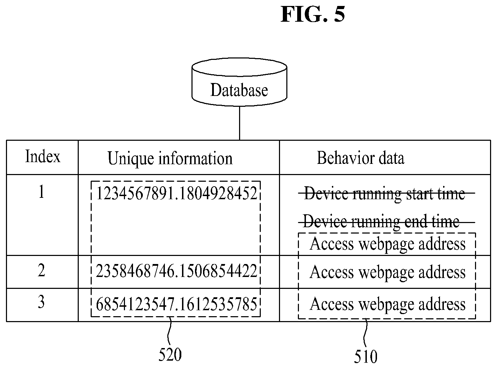

Also, a database used by the behavior data sales service providing method may be stored and maintained in the memory 210. Here, unique information of each of a plurality of activity entities may be stored in the database in association with behavior data of each of the plurality of activity entities. Further description related thereto is made with reference to FIG. 5.

The processor 220 may be configured to process instructions of a computer program by performing basic arithmetic, logic, and I/O operations. The instructions may be provided to the processor 220 through the memory 210 or the communication module 230. For example, the processor 220 may be configured to execute an instruction received according to a program code stored in a storage device such as the memory 210. That is, according to an example embodiment, the processor 220 may be an entity that performs the behavior data sales service providing method.

The communication module 230 may provide a function for communication with a server or a terminal (not shown) of a purchase entity that purchases unique information of each of the activity entities (or a subscription entity that desires to make a subscription to use the unique information of each of the activity entities) through a network (not shown). In the case of receiving unique information and behavior data of each of the activity entities from a server or a terminal (not shown) of a separate data collection entity instead of directly collecting unique information of each of the activity entities and behavior data of each of the activity entities to build the database (i.e., the database in which the unique information of each of the plurality of activity entities is stored in association with the behavior data of each of the plurality of activity entities), the server 200 may provide a function for communication with the server or the terminal of the data collection entity. Here, the network may include one network topology that includes a personal area network (PAN), a local area network (LAN), a campus area network (CAN), a metropolitan area network (MAN), a wide area network (WAN), a broadband network (BBN), the Internet, and the like. Also, the network may include at least one network topology that includes a bus network, a star network, a ring network, a mesh network, a star-bus network, a tree or hierarchical network, and the like. However, it is provided as an example only.

For example, when the processor 220 sells unique information of each of activity entities stored in the database to a purchase entity (or a subscription entity), the unique information of each of the activity entities may be transferred to a server or a terminal of the purchase entity (or the subscription entity) over the network under control of the communication module 230. On the contrary, in response to a request for verifying behavior data of a specific activity entity from the server or the terminal of the purchase entity (or the subscription entity), unique information of the specific activity entity may be transferred to the server 200 through the communication module 230. The processor 220 may provide the server or the terminal of the purchase entity (or the subscription entity) with the behavior data stored in the database of the memory 210 in association with the unique information of the specific activity entity, through the communication module 230.

Also, in response to a control signal or an instruction for changing unique information of each of the activity entities from the processor 220, the control signal or the instruction for changing the unique information of each of the activity entities may be transmitted to each of the activity entities through the communication module 230.

The I/O interface 240 may refer to a device for interface with an I/O device (not shown). For example, an input device may include a device, such as a keyboard, and a mouse and an output device may include a device, such as a display for displaying a communication session of an application. As another example, the I/O interface 240 may refer to a device for interface with a device in which an input function and an output function are integrated into a single function, such as a touchscreen. In detail, for example, when the processor 220 processes an instruction of a computer program loaded to the memory 210, a service screen or content according to performing the behavior data sales service providing method may be displayed on a display through the I/O interface 240.

Also, according to other example embodiments, the server 200 may include a number of components greater than or less than a number of components shown in FIG. 2. However, there is no need to clearly illustrate many conventional components. For example, the server 200 may be configured to include at least a portion of the aforementioned I/O device or may further include other components, for example, a transceiver, a global positioning system (GPS) module, a camera, various types of sensors, and a database.

Hereinafter, example embodiments of a method and system for providing a behavior data sales service are further described.

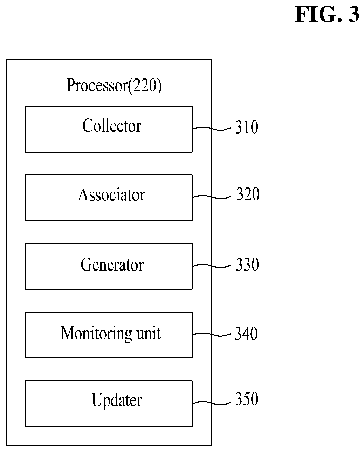

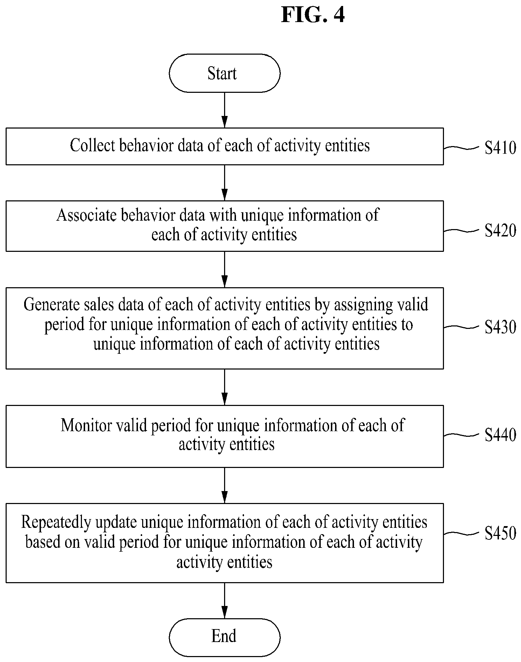

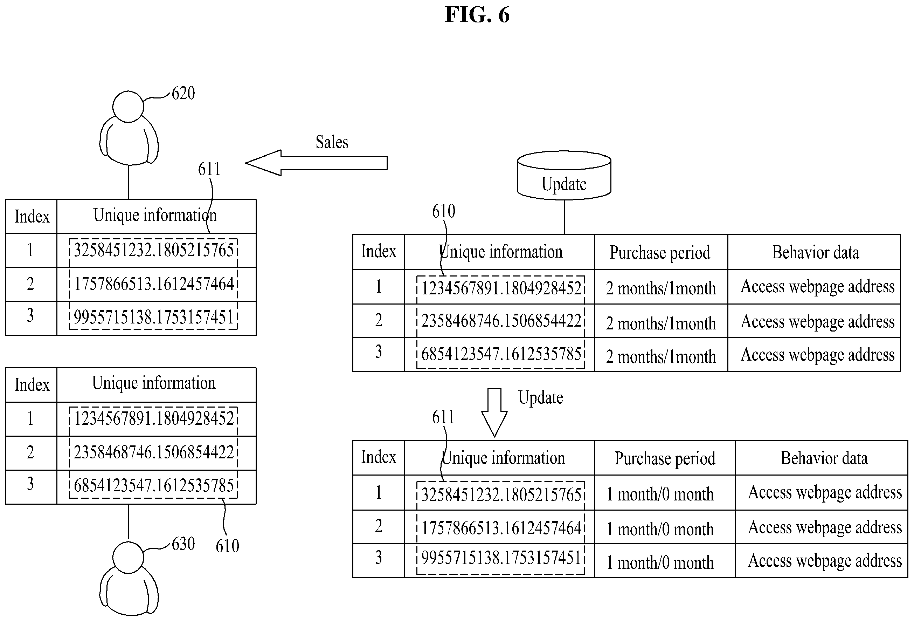

FIG. 3 is a diagram illustrating an example of a component includable in a processor of a server according to an example embodiment, FIG. 4 is a flowchart illustrating a behavior data sales service providing method performed by a server according to an example embodiment, FIG. 5 illustrates an example of a database used by a behavior data sales service providing method according to an example embodiment, and FIG. 6 illustrates an example of providing, by a server, a behavior data sales service according to an example embodiment.

A computer-implemented behavior data sales service providing system according to an example embodiment may be configured in the server 200. To receive behavior data of each of activity entities, the server 200 may perform a behavior data sales service providing method of selling and providing sales data including unique information of each of the activity entities to a server or a terminal of each of purchase entities (or subscription entities), that is, a client that purchases the unique information of each of the activity entities and then repeatedly updating the unique information of each of the activity entities according to a valid period for the unique information of each of the activity entities. Therefore, it is possible to solve an issue that the purchase entities constantly collect and use the unique information of each of the activity entities without permission and an issue that personal information of each of the activity entities is exposed.

Hereinafter, the term "purchase entity (or subscription entity)" used herein refers to a server or a terminal of a purchase entity (or subscription entity) that purchases sales data including unique information of each of activity entities, and the term "sales entity" used herein refers to the server 200 that is a substantial entity that performs the behavior data sales service providing method.

Also, in the following, unique information of each of the activity entities refers to data that is arbitrarily assigned to simply classify and identify each of the activity entities regardless of data (personal data) for verifying an identity of each of the activity entities, such as, for example, a software ID changeable on a device of each of the activity entities. Here, the software ID includes an advertising ID provided from a program that runs on the device of each of the activity entities, an advertising ID provided from an OS of the device of each of the activity entities, or a cookie ID provided from a web program that runs on the device of each of the activity entities. Therefore, the behavior data sales service providing method and system using the unique information of each of the activity entities may update the unique information of each of the activity entities in the device of each of the activity entities as well as the database included in the memory 210 of the server 200, and may prevent and solve an issue of identity exposure according to using identification data of each of the activity entities (personal data capable of specifying each of the activity entities).

Also, in the following, behavior data of each of the activity entities refers to behavioral pattern data of each of the activity entities related to a program that runs on the device of each of the activity entities. For example, the behavior data may refer to data representing a type of a webpage accessed by a device of a corresponding activity entity, content read by the activity entity on the webpage, and a type of an application run by the activity entity on the device.

Referring to FIG. 3, to perform the behavior data sales service providing method of FIG. 4, the processor 220 of the server 200 may include a collector 310, an associator 320, a generator 330, a monitoring unit 340, and an updater 350 as components. Depending on example embodiments, the components of the processor 220 may be separated or merged for representation of a function of the processor 220. For example, at least a portion of the components of the processor 220 may be implemented in a terminal or a server of each of the activity entities that communicates with the memory 210 of the server 200 or the server 200.

The processor 220 and the components of the processor 220 may control the server 200 to perform operations S410 to S450 included in the behavior data sales service providing method of FIG. 4. For example, the processor 220 and the components of the processor 220 may be configured to execute an instruction according to a code of at least one program and a code of an OS included in the memory 210.

Here, the components of the processor 220 may be representations of different functions of the processor 220 performed by the processor 220 according to an instruction provided from a program code stored in the server 200. For example, the collector 310 may be used as a functional representation of the processor 220 that controls the server 200 to collect behavior data of each of the activity entities in response to the instruction.

Although not illustrated, the processor 220 may read a necessary instruction from the memory 210 to which instructions associated with control of the server 200 are loaded, prior to operation S410. In this case, the read instruction may include an instruction for controlling the processor 220 to perform the following operations S410 to S450.

Referring to FIG. 4, in operation S410, the collector 310 may collect behavior data of each of activity entities. However, depending on example embodiments, operation S410 may be omitted from the behavior data sales service providing method. In this case, the collector 310 may receive the behavior data of each of the activity entities from a server or a terminal of a separate data collection entity.

In operation S420, the associator 320 may associate the behavior data with unique information of each of the activity entities. In detail, the associator 320 may store the behavior data in association with the unique information of each of the activity entities in the database that is stored and maintained in the memory 210.

Although not illustrated as a separate operation, the associator 320 may perform separate processing before associating the behavior data with the unique information. For example, in operation S420, the associator 320 may perform de-identification processing on the behavior data of each of the activity entities to make it impossible to verify an identity of each of the activity entities from the behavior data of each of the activity entities and then associate the unique information of each of the activity entities with the de-identification processed behavior data of each of the activity entities.

Such de-identification processing is to comply with laws related to collecting and using personal data and it is also illegal to collect and use data capable of specifying, that is, identifying an activity entity. Therefore, the associator 320 may allow the collector 310 to obtain explicit or implicit consent from each of the activity entities in performing de-identification processing and also collecting the behavior data of each of the activity entities.

Also, to reduce complexity of a behavior data processing process for selecting a targeted advertising from each of the activity entities, the associator 320 may extract valuable behavior data from the behavior data of each of the activity entities in the process of performing de-identification processing. For example, to provide a targeted advertising to each of the activity entities, the associator 320 may extract valuable behavior data from behavior data of each of the activity entities and then perform de-identification processing on the extracted behavior data of each of the activity entities.

Here, extracting the valuable behavior data from the behavior data of each of the activity entities refers to extracting behavior data that is directly or indirectly related to providing the targeted advertising to each of the activity entities. Here, "valuable" may represent "likely or highly likely to be used in the process of providing the targeted advertising to each of the activity entities."

For example, referring to FIG. 5, the associator 320 may store, in a database, only valuable behavior data 510 excluding valueless behavior data in behavior data of each of activity entities collected by the collector 310 in association with unique information 520 of each of the activity entities.

In operation S430, the generator 330 may generate sales data of each of the activity entities by assigning a valid period for the unique information of each of the activity entities to the unique information of each of the activity entities.

Here, the valid period for the unique information of each of the activity entities refers to a time and a period that is used as a reference when the updater 350 repeatedly updates the unique information of each of the activity entities and may be appropriately preset as, for example, a weekly unit or a monthly unit.

Also, although not illustrated as a separate operation in FIG. 4, the generator 330 may sell sales data of each of the activity entities to each of purchase entities between operations S430 and S440. Selling the sales data of each of the activity entities to each of the purchase entities may be performed through a sales platform of the server 200 that provides the behavior data sales service. Also, a method of selling the sales data of each of the activity entities to each of the purchase entities may use a bid-based auction scheme in addition to a list price scheme in which purchase price is set in proportion to a period, for example, a purchase period for which a purchase entity desires to use the behavior data of each of the activity entities.

In operation S440, the monitoring unit 340 may monitor the valid period for the unique information of each of the activity entities in response to selling sales data of each of the activity entities to each of the purchase entities.

In operation S450, the updater 350 may repeatedly update the unique information of each of the activity entities according to the valid period for the unique information of each of the activity entities. In detail, if the valid period for the unique information of each of the activity entities arrives while the monitoring unit 340 is monitoring the valid period for the unique information of each of the activity entities, the updater 350 may change and update the unique information of each of the activity entities in response to an update request signal from the monitoring unit 340.

Here, the updater 350 may update the unique information of each of the activity entities on the database of the memory 210 and, at the same time, may update the unique information of each of the activity entities on a device of each of the activity entities. Therefore, as the unique information of each of the activity entities may be changed and updated in all of the database of the server 200 and the device of each of the activity entities, an advertisement may be transmitted based on the unique information of each of the activity entities.

The repeatedly updated unique information of each of the activity entities may be repeatedly provided to at least one purchase entity among the purchase entities by the updater 350.

Here, the updater 350 may change a number of times the repeatedly updated unique information of each of the activity entities is provided to at least one purchase entity based on a purchase price and a purchase period in which the at least one purchase entity purchases sales data of each of the activity entities.

Here, referring to FIG. 6 as an example of updating and providing unique information of each of activity entities, when unique information 610 of each of activity entities is sold to each of a first purchase entity 620 and a second purchase entity 630 at different purchase price, and a service use period of the first purchase entity 620 is set for 2 months and a service use period of the second purchase entity 630 is set for 1 month (i.e., when a purchase period of the first purchase entity 610 is 2 months and a purchase period of the second purchase entity 630 is 1 month), the updater 350 may update the unique information 610 of each of the activity entities with arbitrary new unique information 611 one month after providing the unique information 610 of each of the activity entities to each of the first purchase entity 620 and the second purchase entity 630 for the first time. Here, update may be performed not only on a database of the server 200 but also on a device of each of the activity entities. Here, since the first purchase entity 620 pays a service fee at a higher purchase price than the second purchase entity 630 and has a service period of 2 months (i.e., the first purchase entity 620 has a longer purchase period by 1 month than the second purchase entity 630), the updater 350 may provide the updated unique information 611 of each of the activity entities only to the first purchase entity 620 after 1 month. That is, the updater 350 may change a number of times the repeatedly updated unique information of each of the activity entities is provided to at least one purchase entity based on a purchase price and a purchase period in which the at least one purchase entity purchases sales data of each of the activity entities, such as, for example, providing the repeatedly updated unique information of each of the activity entities to the first purchase entity 620 that pays a service fee at a relatively high purchase price (i.e., the first purchase entity 620 having a relatively long purchase period) twice and providing the repeatedly updated unique information of each of the activity entities to the second purchase entity 630 that pays a service fee at a relatively low purchase price (i.e., the second purchase entity 630 having a relatively short purchase period) only once.

Therefore, while the first purchase entity 620 may maintain and continuously use the updated unique information 611 of each of the activity entities, the second purchase entity 630 maintains the previously updated unique information 610 of each of the activity entities, which differs from the actual unique information 611 on the device of each of the activity entities. Therefore, although the second purchase entity 630 has behavior data associated with the unique information 610 of each of the activity entities, the behavior data of each of the activity entities may be valueless.

As described above, the updater 350 may repeatedly update the unique information 610, 611 of each of the activity entities according to the valid period and may allow purchase entities, for example, the first purchase entity 620 and the second purchase entity 630, to use the unique information 610, 611 of each of the activity entities only for a limited period in proportion to a paid purchase price and a purchase period, thereby solving an issue that the purchase entities, for example, the second purchase entity 630, may constantly collect and use the unique information 611 of each of the activity entities without permission.

In operation S450, the updater 350 may store and maintain a change history related to the unique information of each of the activity entities in the database of the memory 210, in addition to simply updating the unique information of each of the activity entities.

Although a behavior data sales service providing method for associating and maintaining behavior data and unique information of each of activity entities and thereby extracting and providing the associated behavior data through the unique information of each of the activity entities is described, the server 200 according to an example embodiment may perform a unique information sales service providing method for updating and selling only the unique information regardless of the behavior data. In this case, the processor 220 of the server 200 may be configured to include the aforementioned generator 330, monitoring unit 340, and updater 350 as components and may generate and sell sales data of each of the activity entities by assigning a valid period for unique information of each of the activity entities to the unique information of each of the activity entities through the generator 330, may monitor the valid period for the unique information of each of the activity entities in response to selling the sales data of each of the activity entities to each of the purchase entities through the monitoring unit 340, and may repeatedly update the unique information of each of the activity entities according to the valid period for the unique information of each of the activity entities through the updater 350. Detailed description related to each component is described above and thus, further description related thereto is omitted.

The apparatuses described herein may be implemented using hardware components, software components, or a combination thereof. For example, the apparatuses and the components described herein may be implemented using one or more general-purpose or special purpose computers, such as, for example, a processor, a controller, an arithmetic logic unit (ALU), a digital signal processor, a microcomputer, a field programmable gate array (FPGA), a programmable logic unit (PLU), a microprocessor, or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will be appreciated that a processing device may include multiple processing elements and/or multiple types of processing elements. For example, a processing device may include multiple processors or a processor and a controller. In addition, different processing configurations are possible, such as parallel processors.

The software may include a computer program, a piece of code, an instruction, or some combinations thereof, for independently or collectively instructing or configuring the processing device to operate as desired. Software and/or data may be embodied in any type of machine, component, physical equipment, computer storage medium or device, to be interpreted by the processing device or to provide an instruction or data to the processing device. The software also may be distributed over network coupled computer systems so that the software is stored and executed in a distributed fashion. The software and data may be stored by one or more computer readable storage media.

The methods according to the above-described example embodiments may be configured in a form of program instructions performed through various computer devices and recorded in non-transitory computer-readable media. Here, the media may continuously store computer-executable programs or may temporarily store the same for execution or download. Also, the media may be various types of recording devices or storage devices in a form in which one or a plurality of hardware components are combined. Without being limited to media directly connected to a computer system, the media may be distributed over the network. Examples of the media include magnetic media such as hard disks, floppy disks, and magnetic tapes; optical media such as CD-ROM and DVDs; magneto-optical media such as floptical disks; and hardware devices that are specially configured to store program instructions, such as read-only memory (ROM), random access memory (RAM), flash memory, and the like. Examples of other media may include record media and storage media managed by an app store that distributes applications or a site that supplies and distributes other various types of software, a server, and the like.

Although the example embodiments are described with reference to some specific example embodiments and accompanying drawings, it will be apparent to one of ordinary skill in the art that various alterations and modifications in form and details may be made in these example embodiments without departing from the spirit and scope of the claims and their equivalents. For example, suitable results may be achieved if the described techniques are performed in different order, and/or if components in a described system, architecture, device, or circuit are combined in a different manner, and/or replaced or supplemented by other components or their equivalents.

Therefore, other implementations, other example embodiments, and equivalents of the claims are to be construed as being included in the claims.

## Claims

1. A method of providing a behavior data sales service, implemented by a computer system, the method comprising:
collecting behavior data of each of activity entities;
associating the behavior data with unique information of each of the activity entities;
generating sales data of each of the activity entities by assigning a valid period for the unique information of each of the activity entities to the unique information of each of the activity entities;
monitoring the valid period for the unique information of each of the activity entities in response to selling sales data of each of the activity entities to each of purchase entities; and
repeatedly updating the unique information of each of the activity entities according to the valid period for the unique information of each of the activity entities.

2. The method of claim 1, further comprising:
repeatedly providing the repeatedly updated unique information of each of the activity entities to at least one purchase entity among the purchase entities.

3. The method of claim 2, wherein the repeatedly providing comprises changing a number of times the repeatedly updated unique information of each of the activity entities is provided to the at least one purchase entity based on a purchase price and a purchase period in which the at least one purchase entity purchases sales data of each of the activity entities.

4. The method of claim 1, wherein the generating further comprises selling the sales data of each of the activity entities to each of the purchase entities based on a bid-based auction scheme.

5. The method of claim 4, wherein the selling comprises selling the sales data of each of the activity entities to each of the purchase entities through a sales platform of a server that provides the behavior data sales service.

6. The method of claim 1, wherein the unique information of each of the activity entities is data that is arbitrarily assigned to simply classify and identify each of the activity entities regardless of data that verifies an identity of each of the activity entities.

7. The method of claim 6, wherein the unique information of each of the activity entities is a software ID that is changeable on a device of each of the activity entities.

8. The method of claim 1, wherein the repeatedly updating comprises:
updating the unique information of each of the activity entities on a database of a server that provides the behavior data sales service; and
updating the unique information of each of the activity entities on a device of each of the activity entities.

9. The method of claim 1, wherein the behavior data includes behavioral pattern data of each of the activity entities related to a program that runs on a device of each of the activity entities.

10. The method of claim 1, wherein the associating comprises:
performing de-identification processing on the behavior data of each of the activity entities to make it impossible to verify an identity of each of the activity entities from the behavior data of each of the activity entities; and
associating the unique information of each of the activity entities with the de-identification processed behavior data of each of the activity entities.

11. The method of claim 10, wherein the performing comprises:
extracting valuable behavior data from the behavior data of each of the activity entities to provide a targeted advertising to each of the activity entities; and
performing de-identification processing on the extracted behavior data of each of the activity entities.

12. A non-transitory computer-readable record medium storing instructions that, when executed by a processor, cause the processor to perform a behavior data sales service providing method in conjunction with a computer system, and the behavior data sales service providing method comprises:
collecting behavior data of each of activity entities;
associating the behavior data with unique information of each of the activity entities;
generating sales data of each of the activity entities by assigning a valid period for the unique information of each of the activity entities to the unique information of each of the activity entities;
monitoring the valid period for the unique information of each of the activity entities in response to selling sales data of each of the activity entities to each of purchase entities; and
repeatedly updating the unique information of each of the activity entities according to the valid period for the unique information of each of the activity entities.

13. The non-transitory computer-readable record medium of claim 12, wherein the behavior data sales service providing method further comprises repeatedly providing the repeatedly updated unique information of each of the activity entities to at least one purchase entity among the purchase entities, and
the repeatedly providing comprises changing a number of times the repeatedly updated unique information of each of the activity entities is provided to the at least one purchase entity based on a purchase price and a purchase period in which the at least one purchase entity purchases sales data of each of the activity entities.

14. A computer-implemented behavior data sales service providing system comprising:
at least one processor configured to execute computer-readable instructions,
wherein the at least one processor comprises:
a collector configured to collect behavior data of each of the activity entities;
an associator configured to associate the behavior data with unique information of each of the activity entities;
a generator configured to generate sales data of each of the activity entities by assigning a valid period for the unique information of each of the activity entities to the unique information of each of the activity entities;
a monitoring unit configured to monitor the valid period for the unique information of each of the activity entities in response to selling sales data of each of the activity entities to each of purchase entities; and
an updater configured to repeatedly update the unique information of each of the activity entities according to the valid period for the unique information of each of the activity entities.

15. The behavior data sales service providing system of claim 14, wherein the updater is configured to repeatedly provide the repeatedly updated unique information of each of the activity entities to at least one purchase entity among the purchase entities, and to change a number of times the repeatedly updated unique information of each of the activity entities is provided to the at least one purchase entity based on a purchase price and a purchase period in which the at least one purchase entity purchases sales data of each of the activity entities.
